# EUROPÄISCHE PATENTSCHRIFT

(11) **EP 3 080 821 B1**
(45) Veröffentlichungstag und Bekanntmachung des Hinweises auf die Patenterteilung: **01.11.2017**
(21) Anmeldenummer: 13811413.7
(22) Anmeldetag: 10.12.2013
(51) Int. Cl.: H01F 27/34, H01F 27/38, H01F 27/42

(54) **VORRICHTUNG UND VERFAHREN ZUR VERRINGERUNG EINES MAGNETISCHEN GLEICHFLUSS-ANTEILS IM KERN EINES TRANSFORMATORS**
DEVICE AND METHOD FOR REDUCING A MAGNETIC UNIDIRECTIONAL FLUX COMPONENT IN THE CORE OF A TRANSFORMER
DISPOSITIF ET PROCÉDÉ VISANT À RÉDUIRE UNE COMPOSANTE DE FLUX MAGNÉTIQUE CONTINU DANS LE NOYAU D'UN TRANSFORMATEUR

(43) Veröffentlichungstag der Anmeldung: 19.10.2016
(73) Patentinhaber: Siemens Aktiengesellschaft, 80333 München (DE)
(72) Erfinder: HAMBERGER, Peter, A-4202 Kirchschlag bei Linz (AT); LEIKERMOSER, Albert, A-5020 Salzburg (AT)
(74) Vertreter: Maier, Daniel Oliver
(86) Internationale Anmeldenummer: PCT/EP2013/076104
(87) Internationale Veröffentlichungsnummer: WO 2015/086048

(56) Entgegenhaltungen:
- WO-A1-2012/041367
- WO-A1-2012/041368
- WO-A2-2004/013951
- US-A1- 2006 197 511

## Beschreibung

### Technisches Gebiet

Die Erfindung betrifft eine Vorrichtung zur Verringerung eines magnetischen Gleichfluss-Anteils im Kern eines Transformators, umfassend
- zumindest eine Kompensationswicklung, welche magnetisch mit dem Kern des Transformators gekoppelt ist,
- zumindest eine Schalteinheit, welche elektrisch in einem Strompfad in Reihe mit der Kompensationswicklung angeordnet ist, um in die Kompensationswicklung einen Strom einzuspeisen, dessen Wirkung dem Gleichfluss-Anteil entgegengerichtet ist, und
- zumindest eine Strombegrenzungsdrossel, welche elektrisch in einem Strompfad in Reihe mit der Kompensationswicklung angeordnet ist,
sowie ein Verfahren zum Betrieb einer solchen Vorrichtung.

### Stand der Technik

Bei elektrischen Transformatoren, wie sie in Energieverteilungsnetzen eingesetzt werden, kann es zu einer unerwünschten Einspeisung eines Gleichstroms in die Primärwicklung oder Sekundärwicklung kommen. Eine solche Gleichstromeinspeisung, im Folgenden auch als DC-Anteil bezeichnet, kann beispielsweise von elektronischen Baukomponenten herrühren, wie sie heutzutage bei der Ansteuerung von elektrischen Antrieben oder auch bei der Blindleistungskompensation verwendet werden. Eine andere Ursache können so genannte "Geomagnetically Induced Currents" (GIC) sein.

Ein DC-Anteil hat im Kern des Transformators einen Gleichfluss-Anteil zur Folge, der sich dem Wechselfluss überlagert. Dies führt zu einer unsymmetrischen Aussteuerung des magnetischen Werkstoffs im Kern und bringt eine Reihe von Nachteilen mit sich. Bereits ein Gleichstrom von wenigen Ampere kann eine lokale Erwärmung im Transformator verursachen, was die Lebensdauer der Wicklungsisolation beeinträchtigen kann. Ein weiterer unerwünschter Effekt ist eine erhöhte Geräuschemission bei Betrieb des Transformators, weil moderne Transformatorenkerne eine sehr hohe magnetische Leitfähigkeit haben, somit bereits geringe elektrische Gleichströme ausreichen, um den Transformatorkern in einer Halbperiode des Wechselstroms in Sättigung zu bringen.

Zur Verringerung des Betriebsgeräusches eines Transformators sind verschiedene aktiv und passiv wirkende Einrichtungen bekannt. WO 2004/013951 A2 beschreibt eine solche Einrichtung. Gemäß der WO 2012/041368 A1 wird eine in der Kompensationswicklung induzierte elektrische Spannung genutzt und für die Kompensation des störenden magnetischen Gleichfluss-Anteils herangezogen. Dabei wird mittels einer elektronischen Schalteinheit ein Kompensationsstrom erzeugt, wobei das Einschalten der Schalteinheit einer vorgegebenen Schaltstrategie folgt, etwa mittels einer Phasenanschnittsteuerung. Hier wird ein Thyristorschalter in Serie mit einer Strombegrenzungsdrossel geschaltet, um den Kompensationsstrom in die Kompensationswicklung einzubringen.

Aufgrund der genannten Maßnahmen sind die thermische Belastung der Wicklung des Transformators sowie die Verluste und Geräusche geringer. Die Vorrichtung zur Verringerung eines magnetischen Gleichfluss-Anteils lässt sich dabei mit vergleichsweise einfachen Mitteln unter Verwendung von diskreten und/oder programmierbaren Bausteinen realisieren. Für die Erzeugung des Kompensationsstroms ist kein Energiespeicher, wie beispielsweise eine Batterie oder ein Kondensator, erforderlich, die Energie zur Erzeugung des Kompensationsstroms wird direkt der Kompensationswicklung entnommen. Aufgrund ihrer Einfachheit ist die Zuverlässigkeit der Schaltungsanordnung hoch und für den wartungsarmen Langzeitbetrieb eines Transformators in einem Energieverteilungsnetz gut geeignet. Der Einsatzbereich umfasst sowohl Transformatoren im Nieder- oder Mittelspannungsbereich, wie auch Transformatoren sehr hoher Leistung (Leistungstransformatoren, HGÜ(Hochspannungs-Gleichstrom-Übertragungs)-Transformatoren). Weder die Baugröße noch sicherheitsrelevante Einrichtungen oder andere Auslegungskriterien des Transformators werden durch den Einsatz der Vorrichtung ungünstig beeinflusst.

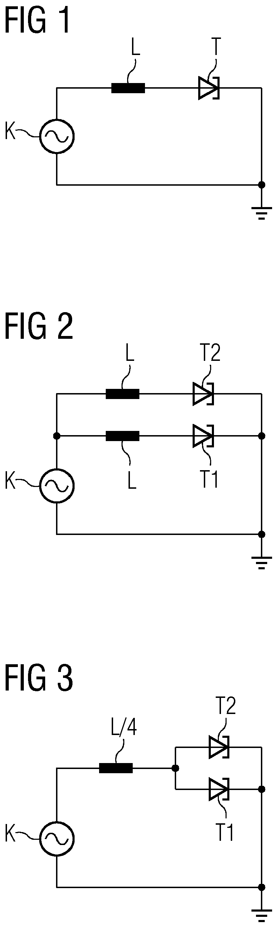

Von Vorteil bei einer Vorrichtung zur Verringerung eines magnetischen Gleichfluss-Anteils ist, wenn die Strombegrenzungsdrossel innerhalb des Kessels des Transformators eingebaut ist, um dessen (Ö1-)Kühlung zu nützen. Die Strombegrenzungsdrossel benötigt aber Platz im Kessel des Transformators. Da oft ein sogenannter Thyristorkreis (bestehend aus einer als Thyristor ausgebildeten Schalteinheit und einer Strombegrenzungsdrossel) zum Einbringen der notwendigen Amperewindungen (= der notwendigen magnetischen Durchflutung) in den Transformator nicht ausreicht, werden in bekannter Weise mehrere Thyristorkreise kaskadiert, wodurch aber auch mehrere Strombegrenzungsdrosseln benötigt werden, wie dies etwa in Fig. 2 dargestellt ist. In der Praxis müssen manchmal bis zu vier Thyristorkreise kaskadiert werden, was auch den Einbau von vier Strombegrenzungsdrossel in den Kessel des Transformators bedeutet. Mehrere Strombegrenzungsdrosseln führen jedoch zu einem erhöhten Platzbedarf im Kessel des Transformators.

### Darstellung der Erfindung

Es ist eine Aufgabe der vorliegenden Erfindung, eine Vorrichtung zur Verringerung eines magnetischen Gleichfluss-Anteils im Kern eines Transformators zur Verfügung zu stellen, welche gegenüber bekannten kaskadierten Schaltkreisen (jeweils bestehend aus einer Schalteinheit und einer Strombegrenzungsdrossel) eine geringere Anzahl an Strombegrenzungsdrosseln aufweist.

Diese Aufgabe wird durch eine Vorrichtung mit den Merkmalen des Patentanspruchs 1 gelöst. Vorteilhafte Ausgestaltungen der Erfindung sind in den jeweiligen abhängigen Ansprüchen definiert.

Gemäß Anspruch 1 ist vorgesehen,
- dass pro Strombegrenzungsdrossel zwei Schalteinheiten parallel zueinander geschaltet sind,
- dass die Strombegrenzungsdrossel aus zwei Wicklungen besteht, welche zueinander entweder in Serie oder parallel schaltbar sind, wobei
- im Fall der Parallelschaltung die erste Wicklung in Serie zur ersten Schalteinheit und die zweite Wicklung in Serie zur zweiten Schalteinheit geschaltet ist,
- während im Fall der Serienschaltung erste und zweite Wicklung zueinander und zur ersten Schalteinheit in Serie geschaltet sind.

Durch die Gestaltung der Strombegrenzungsdrossel mit zwei Wicklungen ist es möglich, die Wicklungen in Serie oder parallel zu schalten. Damit kann man die Strombegrenzungsdrossel von voller Induktivität (Serienschaltung) auf Viertel-Induktivität (Parallelschaltung) umschalten.

Der Vorteil der umschaltbaren Lösung liegt in der möglichen Reduzierung des Oberwellenanteils im Kompensationsstrom. Der erforderliche Kompensationsstrom kann durch Schalten der Schalteinheit (z.B. Zünden des Thyristors) eingestellt werden. Schaltet man im Zeitpunkt des Nulldurchgangs der induzierten Spannung, so stellt sich der maximale Gleichstrom ein, der jedoch mit einem Wechselstrom von der Amplitude des Gleichstroms und der Netzfrequenz überlagert ist. Schaltet man die Schalteinheit später, so wird der Gleichstrom geringer, es entstehen jedoch auch OberschwingungsWechselströme.

Wenn als Kompensationsstrom nur ein Gleichstrom zwischen Null und einem Viertel des maximalen Stroms eingebracht werden muss, kann man nur eine Schalteinheit verwenden und die Strombegrenzungsdrossel mit voller Induktivität. Im Fall, dass der einzubringende Kompensationsstrom die Hälfte des maximalen Gleichstroms ist, schaltet man im Spannungsnulldurchgang und es treten keine Oberwellen auf. Liegt der einzubringende Kompensationsstrom über der Hälfte des maximalen Gleichstroms, so schaltet man zwei Schalteinheiten parallel, wobei in jedem Zweig eine Strombegrenzungsdrossel mit einem Viertel der Induktivität zum Einsatz kommt.

Wenn erste und zweite Wicklung über einen gemeinsamen magnetischen Ring magnetisch miteinander gekoppelt sind, hat dies den Vorteil, dass etwaige Unterschiede in den Widerständen der parallel geschalteten Schalteinheiten ausgeglichen werden. Damit wird eine ungleiche Stromaufteilung auf die beiden Schalteinheiten vermieden und damit eine thermische Überlastung einer Schalteinheit. Bei ungleicher zeitlicher Änderung des Stroms in den beiden Zweigen wird in den Zweigen eine Spannung induziert, die der ungleichen zeitlichen Änderung des Stroms entgegenwirkt. Fließt in beiden Zweigen der gleiche Strom, so wird im magnetischen Ring kein magnetischer Fluss induziert.

Die beiden Wicklungen der Strombegrenzungsdrossel und der gemeinsame magnetische Ring können so ausgeführt sein, dass erste und zweite Wicklung jeweils um einen magnetischen Schenkel gewickelt sind, die beiden Schenkel parallel zueinander ausgerichtet und an ihren Stirnseiten jeweils durch ein magnetisches Joch miteinander verbunden sind.

Zumindest ein magnetisches Joch kann zwei an ihren Enden jeweils miteinander verbundene Jochschenkel aufweisen, wobei über einen Jochschenkel mehrere Windungen der ersten Wicklung und über den anderen Jochschenkel die gleiche Anzahl von Windungen der zweiten Wicklung in entgegengesetzter Richtung gewickelt sind. Die über die Jochschenkel gewickelten Windungen sind Hilfs- oder Zusatzwindungen, welche die Wirkungsweise eines Ringkerns realisieren. Der Schlitz zwischen den beiden Jochschenkeln kann vom Kühlmittel im Kessel des Transformators durchflossen werden und begünstigt so die Strömung des Kühlmittels durch die Windungen.

Die Schalteinheit kann zumindest einen Halbleiterschalter, bevorzugt einen Thyristor, enthalten. Der Vorteil der Verwendung eines Thyristors liegt darin, dass ein Thyristor mit einem Stromimpuls "gezündet", das heißt in den leitenden Zustand gebracht werden kann. Während der positiven Halbschwingung der Netzspannung hat der Thyristor bis zum nächsten Stromnulldurchgang die Eigenschaft einer Diode. Das Ende der Stromflussdauer wird vom Thyristor selbst bewirkt, indem der Haltestrom unterschritten wird und der Thyristor automatisch "löscht", das heißt, in den nicht leitenden Zustand übergeht. Selbstverständlich sind auch andere Halbleiterschalter, wie GTO, IGBT Transistoren oder andere Schaltelemente denkbar.

Die Schalteinheit kann in vorteilhafter Weise mit einer Steuereinheit verbunden sein, welche mit einer Messeinrichtung zum Erfassen des magnetischen Gleichfluss-Anteils verbunden ist.

Eine Messeinrichtung zum Erfassen des magnetischen Gleichfluss-Anteils ist etwa aus der WO 2012/041368 A1 bekannt, welche dort einen magnetischen Nebenschluss-Teil mit einer Sensorspule umfasst. Der Nebenschluss-Teil ist am Kern des Transformators z.B. an einem Schenkel oder am Joch anliegend angeordnet, um einen Teil des magnetischen Flusses in einem Bypass zu führen. Aus diesem, im Nebenschluss geführten magnetischen Fluss, lässt sich mittels einer Sensorspule sehr leicht ein langzeitstabiles Sensorsignal gewinnen, welches ggf. nach einer Signalaufbereitung den Gleichfluss-Anteil (DC-Anteil) sehr gut abbildet. Das Messergebnis ist weitgehend frei von Drift und langzeitstabil. Da dieser Detektor im Wesentlichen aus dem Nebenschlussteil und der darauf angeordneten Sensorspule besteht, besitzt er eine hohe Zuverlässigkeit.

Das Sensorsignal von der Messeinrichtung zum Erfassen des magnetischen Gleichfluss-Anteils wird der Steuereinrichtung zugeführt. Dabei wird die Schalteinheit zum Beispiel mit einer Stellgröße gesteuert, welche von einem in der Steuereinrichtung vorhandenem Zeitglied vorgegeben wird, wobei das Zeitglied von einem Phasendetektor, welcher die Phase der in der Kompensationswicklung induzierten Spannung detektiert, getriggert wird. Das Zeitglied kann ein diskreter Bauteil oder Teil einer digitalen Schaltung sein. Es kann von Vorteil sein, wenn die Stellgröße das Ergebnis einer Rechenoperation eines Mikroprozessors ist. Der Mikroprozessor kann dabei gleichzeitig auch zur Signalaufbereitung des Sensorsignals verwendet werden. Die Schalteinheit kann etwa so angesteuert werden, dass in der Kompensationswicklung ein pulsierender Gleichstrom eingespeist wird. Dies hat den Vorteil, dass der arithmetische Mittelwert dieses pulsierenden Gleichstroms sehr einfach nach Maßgabe des zu kompensierenden DC-Anteils vorgegeben werden kann. Die elektronische Schalteinheit bleibt zwecks Reduktion der in der Induktivität gespeicherten magnetischen Energie sinnvoller Weise solange eingeschaltet, bis der pulsierende Gleichstrom abgeklungen ist. Somit hat ein Überspannungsschutz nach dem Ausschalten der elektrischen Schalteinheit faktisch keine in der Spule gespeicherte magnetische Restenergie zu absorbieren.

Es kann günstig sein, wenn die Schalteinheit und die Steuereinrichtung außerhalb des Kessels eines Transformators angeordnet wird. Die gesamte elektronische Schaltung ist dadurch von außen für Kontrolle und Wartung zugänglich.

Das Verfahren zum Betrieb einer erfindungsgemäßen Vorrichtung sieht vor, dass in dem Fall, wo nur höchstens ein Viertel des maximal möglichen Kompensationsstroms benötigt wird, die beiden Wicklungen der Strombegrenzungsdrossel zueinander in Serie geschaltet werden und nur eine Schalteinheit im Einsatz ist, während im Fall, dass mehr als ein Viertel des maximal möglichen Kompensationsstroms benötigt wird, die beiden Wicklungen der Strombegrenzungsdrossel zueinander parallel geschaltet werden und beide Schalteinheiten im Einsatz sind.

Für die Umschaltung zwischen Parallel- und Serienschaltung kann ein Regelkriterium mit Hysterese verwendet werden, um die Umschaltfrequenz zu reduzieren, wenn der einzubringende Kompensationsstrom im Bereich eines Viertels des maximal möglichen Kompensationsstroms liegt.

Es kann vorgesehen sein, dass die Steuerung zum Steuern der Schalteinheiten ein Zeitglied umfasst, welches von einem Phasendetektor getriggert wird, welcher die Phase der in den Kompensationswicklungen induzierten Spannung detektiert und die Schalteinheit so ansteuert, dass in die Kompensationswicklungen ein pulsierender Gleichstrom eingespeist wird, wie bereits in der WO 2012/041368 A1 gezeigt ist.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
- Figur 1: eine Prinzipschaltung nach dem Stand der Technik zum Einbringen von Kompensationsstrom in eine Kompensationswicklung, umfassend einen Thyristorkreis,
- Figur 2: eine Prinzipschaltung nach dem Stand der Technik zum Einbringen von Kompensationsstrom in eine Kompensationswicklung, umfassend zwei Thyristorkreise,
- Figur 3: eine Prinzipschaltung zum Einbringen von Kompensationsstrom in eine Kompensationswicklung, gemäß einer alternativen Lösung,
- Figur 4: eine Prinzipschaltung gemäß Fig. 3, mit magnetischer Kopplung,
- Figur 5: eine schematische Darstellung einer erfindungsgemäßen Strombegrenzungsdrossel,
- Figur 6: eine Ansicht der erfindungsgemäßen Strombegrenzungsdrossel aus Fig. 5 von oben,
- Figur 7: eine Prinzipschaltung der Strombegrenzungsdrossel aus Fig. 5 und 6,
- Figur 8: eine erfindungsgemäße Strombegrenzungsdrossel mit Serienschaltung der beiden Windungen,
- Figur 9: eine erfindungsgemäße Strombegrenzungsdrossel mit Parallelschaltung der beiden Windungen.

### Ausführung der Erfindung

Gemäß dem Stand der Technik wird bei der sogenannten Gleichstrom-Kompensation gezielt Gleichstrom in eine Kompensationswicklung K eingebracht, um die Gleichstrommagnetisierung des Transformatorkerns aufzuheben. Zum Einbringen der notwendigen magnetischen Durchflutung (der sogenannten Gleichstrom-Amperewindungen) in die Kompensationswicklung K macht man sich die in der Kompensationswicklung K induzierte Wechselspannung zunutze, die Kompensationswicklung K wirkt wie eine Wechselspannungsquelle. An der Kompensationswicklung K wird eine als Thyristor ausgebildete Schalteinheit T in Serie mit einer Strombegrenzungsdrossel L geschaltet. Der erforderliche Gleichstrom kann durch spannungssynchrones Zünden bei einem bestimmten Zündzeitpunkt des Thyristors T eingestellt werden. Zündet man den Thyristor im Spannungsnulldurchgang, so stellt sich der maximale Gleichstrom ein, der jedoch mit einem Wechselstrom von der Amplitude des Gleichstroms und der Netzfrequenz überlagert ist. Zündet man den Thyristor T später, so wird der Gleichstrom kleiner, es entstehen jedoch auch Oberschwingungswechselströme. Der Stromverlauf im Thyristor T wird durch eine Strombegrenzungsdrossel L begrenzt, dimensionierend für die Strombegrenzung ist die zulässige thermische Belastung des Thyristors T.

Reicht zum Einbringen der notwendigen magnetischen Durchflutung ein Thyristorkreis (bestehend aus einem Thyristor T in Serie mit einer Strombegrenzungsdrossel L) nicht aus, so können mehrere Thyristorkreise kaskadiert, also parallel geschaltet werden, wie dies in Fig. 2 für zwei Thyristorenkreise L, T1; L, T2 zu sehen ist.

Um die Anzahl der Strombegrenzungsdrosseln L dabei zu reduzieren, kann man nur die Thyristoren T1, T2 parallel zueinander schalten und diese Parallelschaltung in Serie zu einer Strombegrenzungsdrossel L/4 mit einem Viertel der Induktivität der Strombegrenzungsdrossel L aus Fig. 1 bzw. 2.

Die Strombegrenzungsdrossel L/4 hat etwa die gleiche Größe wie die Strombegrenzungsdrossel L mit voller Induktivität, da sie zwar nur die halbe Windungszahl aufweist, jedoch - da der vierfache Strom fließt - auch in etwa den vierfachen Leiterquerschnitt benötigt. Das Problem ist nun, dass die Widerstände der Thyristoren T1, T2 klein sind, was an sich gut ist, diese Widerstände aber schwanken können. Dies kann zu ungleicher Stromaufteilung in den Thyristoren T1, T2 führen und daher zur thermischen Überlastung eines Thyristors T1, T2.

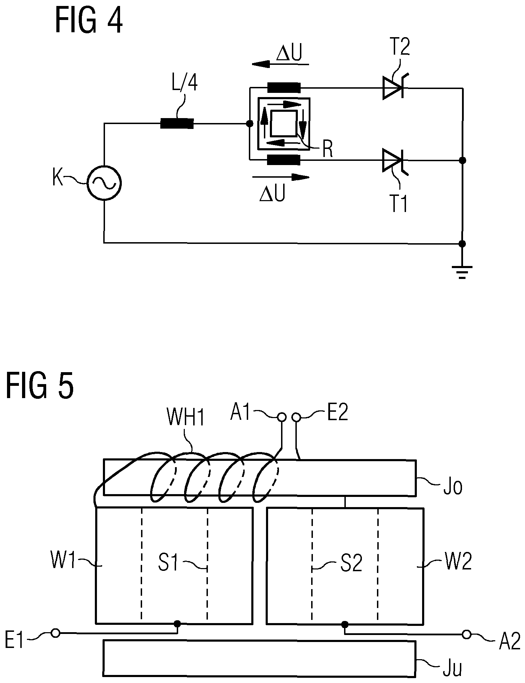

Die Lösung des Problems besteht nun darin, beide Thyristoren T1, T2 über einen magnetisch hochleitenden Ringkern R zu verkoppeln, wie dies in Fig. 4 schematisch dargestellt ist. Bei ungleicher zeitlicher Änderung des Stromes bzw. der Spannung, ΔU, in den beiden Thyristorkreisen wird in den Thyristorkreisen eine Spannung induziert, die der ungleichen zeitlichen Änderung entgegenwirkt. Fließt in den beiden Thyristorkreisen der gleiche Strom, so wird im Ringkern R kein magnetischer Fluss induziert.

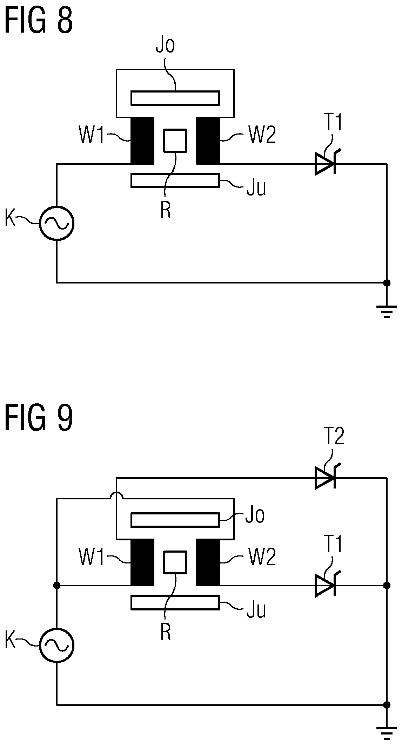

Durch eine geeignete Gestaltung der Strombegrenzungsdrossel L/4 kann die Funktion des Ringkerns R aus Fig. 4 in die Strombegrenzungsdrossel L/4 integriert werden. Zwei Thyristoren T1, T2 werden parallel zueinander geschaltet, die Strombegrenzungsdrossel L/4 besteht aus zwei Wicklungen W1, W2, welche zueinander entweder in Serie oder parallel schaltbar sind, wobei im Fall der Parallelschaltung die erste Wicklung W1 in Serie zum ersten Thyristor T1 und die zweite Wicklung W2 in Serie zum zweiten Thyristor T2 geschaltet ist, während im Fall der Serienschaltung erste und zweite Wicklung W1, W2 zueinander und zum ersten Thyristor T1 in Serie geschaltet sind. Dies ist in den Fig. 8 und 9 dargestellt.

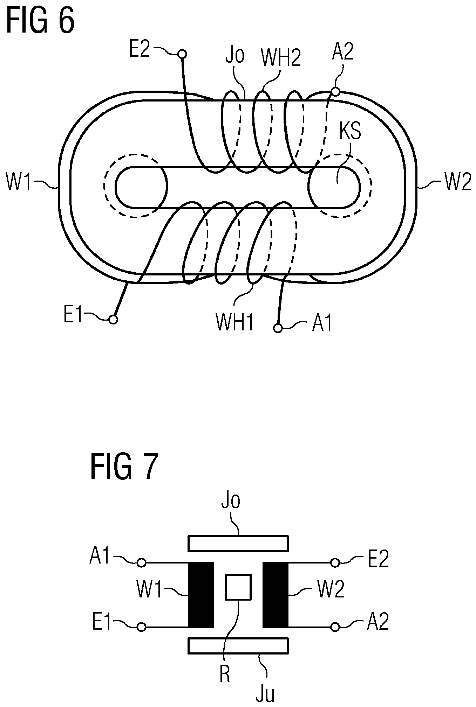

In Fig. 5 und 6 ist der Aufbau einer erfindungsgemäßen Strombegrenzungsdrossel L/4 dargestellt. Die erste Wicklung W1 ist um einen ersten magnetischen Schenkel S1 gewickelt, die zweite Wicklung W2 ist um einen zweiten magnetischen Schenkel S2 gewickelt. Die beiden Schenkel S1, S2 sind parallel zueinander ausgerichtet und an ihren Stirnseiten jeweils durch ein magnetisches Joch Jo, Ju miteinander verbunden, also magnetisch gekoppelt.

Die Joche Jo, Ju sind als Wickelkerne ausgebildet mit einem inneren Schlitz KS. Somit weist ein magnetisches Joch Jo, Ju zwei an seinen Enden jeweils miteinander verbundene Jochschenkel auf. Hier haben die Joche Jo, Ju die Form von ovalen Ringen, mit jeweils zwei geraden Jochschenkeln und zwei gekrümmten Jochteilen, etwa halbkreisförmig, welche die beiden Hochschenkel miteinander verbinden. Jedes Joch Jo, Ju ist in der Regel einteilig ausgeführt.

Über den einen Jochschenkel des oberen Jochs Jo sind mehrere Windungen der ersten Wicklung W1 als erste Hilfswicklung WH1 und über den anderen Jochschenkel die gleiche Anzahl von Windungen der zweiten Wicklung W2 als zweite Hilfswicklung WH2 in entgegengesetzter Richtung gewickelt. Der Eingang E1 der ersten Wicklung liegt an der Unterseite der Wicklung W1, der Ausgang A1 an der Oberseite des Jochs Jo nach der ersten Hilfswicklung WH1. Der Eingang E2 der zweiten Wicklung W2 liegt an der Oberseite des Jochs Jo vor der zweiten Hilfswicklung WH2, der Ausgang A2 der zweiten Wicklung W2 liegt an der Unterseite der zweiten Wicklung W2.

Erste und zweite Wicklung W1, W2 sind über einen gemeinsamen magnetischen Ring, bestehend aus erstem und zweitem Schenkel S1, S2 und den beiden Jochen Jo, Ju, magnetisch miteinander gekoppelt. Erste und zweite Wicklung W1, W2 sind durch die Hilfswicklungen WH1, WH2 über das als Wickelhoch dienende Joch Jo verlängert. Die beiden Hilfswicklungen WH1, WH2 haben die gleiche Windungszahl, die Wickelrichtung ist so gestaltet, dass der verkettete Fluss Null ist. Dann wird bei gleichem Strom in den Wicklungen W1, W2 kein Fluss im Ringkern R induziert. Bei ungleichen Strömen entsteht ein magnetischer Fluss im Ringkern R, dadurch wirkt die Konstruktion wie ein klassischer Ringkern für die beiden Wicklungen W1, W2 und einer ungleichen Verteilung der Ströme in den beiden Wicklungen W1, W2 - und damit einer ungleichen Stromverteilung in den beiden Thyristoren T1, T2 - wird entgegengewirkt.

Die erfindungsgemäße Vorrichtung, bestehend aus einer Strombegrenzungsdrossel L/4 und zwei Thyristoren T, wird in der Regel im und/oder am Transformatorkessel angeordnet sein. Der Schlitz KS der Joche Jo, Ju dient dann auch als Kühlkanal, um die Ölströmung durch die Wicklungen W1, W2 zu begünstigen.

In Fig. 7 ist eine erfindungsgemäße Strombegrenzungsdrossel L/4 symbolisch dargestellt, wobei das kleine Quadrat zwischen den Wicklungen W1 und W2 die magnetische Kopplung über den Ringkern R darstellt.

Durch die erfindungsgemäße Gestaltung der Strombegrenzungsdrossel L/4 können die beiden Wicklungen W1, W2 entweder in Serie oder parallel geschaltet werden. Dadurch kann mit ein und derselben Drossel von voller auf Viertel-Induktivität umgeschaltet werden, die Zusatz- oder Hilfswicklungen WH1, WH2 über das Ringjoch S1, S2, Jo, Ju realisieren den Ausgleich einer ungleichen Stromverteilung.

In Fig. 8 ist die Serienschaltung der beiden Wicklungen W1, W2 dargestellt, es kommt nur der erste Thyristor T1 zum Einsatz. Die Strombegrenzungsdrossel hat die volle Induktivität, durch beide Wicklungen W1, W2 fließt der selbe Strom, der Ringkern R ist ohne Wirkung. Die Serienschaltung kommt zum Einsatz, wenn nur ein Gleichstrom zwischen Null und einem Viertel des maximal möglichen Kompensationsstromes eingebracht werden soll. In diesem Fall reicht es aus, nur einen Thyristor T1 zu verwenden und die Strombegrenzungsdrossel mit voller Induktivität. Allerdings nimmt man hier einen Oberwellenanteil im Kompensationsstrom im Kauf, weil der Thyristor T1 aufgrund des geringeren Strombedarfs verzögert geschaltet wird.

Im Fall, wo der in die Kompensationswicklung einzubringende Strom ein Viertel des maximalen Gleichstroms beträgt, wird weiterhin die Serienschaltung gemäß Fig. 8 verwendet, jedoch wird der Thyristor T1 ohne Zeitverzögerung geschaltet, sodass keine Oberwellen entstehen.

In Fig. 9 ist die Parallelschaltung der beiden Wicklungen W1, W2 dargestellt, es kommen beide Thyristoren T1, T2 zum Einsatz. Die Strombegrenzungsdrossel hat ein Viertel der Induktivität, der Ringkern R sorgt dafür, dass ein über beide Wicklungen W1, W2 unterschiedlicher Stromanstieg ausgeglichen wird. Die Parallelschaltung kommt zum Einsatz, wenn mehr als ein Viertel des maximal möglichen Stroms benötigt wird.

Für alle Ausführungsvarianten gilt, dass beim Schalten der Schalteinrichtung, also beim Zünden der Thyristoren T1, T2, der Kompensationsstrom zu fließen beginnt. Die Steuerung der Thyristoren kann wie in der WO 2012/041368 A1 erfolgen: die Steuereinheit besteht im Wesentlichen aus einem Phasendetektor und einem Zeitglied. Der Phasendetektor, z.B. ein Nulldurchgang-Detektor, leitet aus der induzierten Spannung ein Triggersignal ab, welches einem Zeitglied zugeführt wird. Zusammen mit einem ebenfalls der Steuereinheit zugeführten Steuersignal stellt die Steuereinheit ausgangsseitig eine Stellgrösse bereit, welche dem Thyristor T1, T2 zugeleitet wird. Die Induktivitäten der Wicklungen W1, W2 sind dabei so bemessen, dass bei einem Durchschalten der Thyristoren T1, T2 ein in eine Stromrichtung fließender, pulsierender Stromverlauf in die Kompensationswicklung K eingespeist wird. Dabei wird der Thyristor T am Ende des Gleichstrompulses in den stromlosen Zustand geschaltet, etwa, indem der Haltestrom des Thyristors unterschritten wird.

Für die Umschaltung zwischen Parallel- und Serienschaltung, die mit der gleichen Steuereinheit wie jene für die Schaltung der Thyristoren T1, T2 bewirkt werden kann, wird am besten ein Regelkriterium mit Hysterese verwendet, um die Umschaltfrequenz zu reduzieren, wenn der einzubringende Kompensationsstrom im Bereich der Hälfte des maximal möglichen Kompensationsstroms liegt.

Es können auch mehrere erfindungsgemäße Vorrichtungen, jeweils bestehend aus einer Strombegrenzungsdrossel L/2 und zwei Thyristoren T, parallel geschaltet werden, falls ein höherer Kompensationsstrom als bei Parallelschaltung gemäß Fig. 9 benötigt wird.

### Bezugszeichenliste:

- Jo: erstes Joch
- Ju: zweites Joch
- K: Kompensationswicklung
- KS: Schlitz in Joch Jo, Ju
- L: Strombegrenzungsdrossel
- L/4: Strombegrenzungsdrossel mit einem Viertel der Induktivität von L
- R: magnetischer Ring (Ringkern)
- S1: erster Schenkel des magnetischen Rings
- S2: zweiter Schenkel des magnetischen Rings
- T: Schalteinheit (Thyristor)
- T1: erste Schalteinheit (Thyristor)
- T2: zweite Schalteinheit (Thyristor)
- ΔU: zeitliche Änderung der Spannung
- W1: erste Wicklung der Strombegrenzungsdrossel
- W2: zweite Wicklung der Strombegrenzungsdrossel
- WH1: erste Hilfswicklung zur ersten Wicklung W1 der Strombegrenzungsdrossel
- WH2: zweite Hilfswicklung zur zweiten Wicklung W2 der Strombegrenzungsdrossel

## Patentansprüche

1. Vorrichtung zur Verringerung eines magnetischen Gleichfluss-Anteils im Kern eines Transformators, umfassend
- zumindest eine Kompensationswicklung (K), welche magnetisch mit dem Kern des Transformators gekoppelt ist,
- zumindest eine Schalteinheit (T, T1, T2), welche elektrisch in einem Strompfad in Reihe mit der Kompensationswicklung (K) angeordnet ist, um in die Kompensationswicklung einen Strom einzuspeisen, dessen Wirkung dem Gleichfluss-Anteil entgegengerichtet ist, und
- zumindest eine Strombegrenzungsdrossel (L, L/4), welche elektrisch in einem Strompfad in Reihe mit der Kompensationswicklung (K) angeordnet ist, wobei
- pro Strombegrenzungsdrossel (L, L/4) zwei Schalteinheiten (T1, T2) parallel zueinander geschaltet sind,
- die Strombegrenzungsdrossel (L/4) aus zwei Wicklungen (W1, W2) besteht, **dadurch gekennzeichnet, dass** die Wicklungen (W1, W2) zueinander entweder in Serie oder parallel schaltbar sind, wobei
- im Fall der Parallelschaltung die erste Wicklung (W1) in Serie zur ersten Schalteinheit (T1) und die zweite Wicklung (W2) in Serie zur zweiten Schalteinheit (T2) geschaltet ist,
- während im Fall der Serienschaltung erste und zweite Wicklung (W1, W2) zueinander und zur ersten Schalteinheit (T1) in Serie geschaltet sind.

2. Vorrichtung nach Anspruch 1, **dadurch gekennzeichnet, dass** erste und zweite Wicklung (W1, W2) über einen gemeinsamen magnetischen Ring (R) magnetisch miteinander gekoppelt sind.

3. Vorrichtung nach Anspruch 2, **dadurch gekennzeichnet, dass** erste und zweite Wicklung (W1, W2) jeweils um einen magnetischen Schenkel (S1, S2) gewickelt sind, die beiden Schenkel (S1, S2) parallel zueinander ausgerichtet und an ihren Stirnseiten jeweils durch ein magnetisches Joch (Jo, Ju) miteinander verbunden sind.

4. Vorrichtung nach Anspruch 3, **dadurch gekennzeichnet, dass** zumindest ein magnetisches Joch (Jo, Ju) zwei an ihren Enden jeweils miteinander verbundene Jochschenkel aufweist, wobei über einen Jochschenkel mehrere Windungen (WH1) der ersten Wicklung (W1) und über den anderen Jochschenkel die gleiche Anzahl von Windungen (WH2) der zweiten Wicklung (W2) in entgegengesetzter Richtung gewickelt sind.

5. Vorrichtung nach einem der Ansprüche 1 bis 4, **dadurch gekennzeichnet, dass** die Schalteinheit (T, T1, T2) zumindest einen Halbleiterschalter, bevorzugt einen Thyristor, enthält.

6. Vorrichtung nach einem der Ansprüche 1 bis 5, **dadurch gekennzeichnet, dass** die Schalteinheit (T, T1, T2) mit einer Steuereinheit verbunden ist, welche mit einer Messeinrichtung zum Erfassen des magnetischen Gleichfluss-Anteils verbunden ist.

7. Verfahren zum Betrieb einer Vorrichtung nach einem der Ansprüche 1 bis 6, **dadurch gekennzeichnet, dass** in dem Fall, wo nur höchstens ein Viertel des maximal möglichen Kompensationsstroms benötigt wird, die beiden Wicklungen (W1, W2) der Strombegrenzungsdrossel (L/4) zueinander in Serie geschaltet werden und nur eine Schalteinheit (T1) im Einsatz ist, während im Fall, dass mehr als ein Viertel des maximal möglichen Kompensationsstroms benötigt wird, die beiden Wicklungen (W1, W2) der Strombegrenzungsdrossel (L/4) zueinander parallel geschaltet werden und beide Schalteinheiten (T1, T2) im Einsatz sind.

8. Verfahren nach Anspruch 7, **dadurch gekennzeichnet, dass** für die Umschaltung zwischen Parallel- und Serienschaltung ein Regelkriterium mit Hysterese verwendet wird.

9. Verfahren nach Anspruch 7 oder 8, **dadurch gekennzeichnet, dass** die Steuerung zum Steuern der Schalteinheiten (T, T1, T2) ein Zeitglied umfasst, welches von einem Phasendetektor getriggert wird, welcher die Phase der in der Kompensationswicklung (K) induzierten Spannung detektiert und die Schalteinheit (T, T1, T2) so ansteuert, dass in die Kompensationswicklung (K) ein pulsierender Gleichstrom eingespeist wird.

## Claims

1. Device for reducing a DC magnetic flux content in the core of a transformer, comprising
- at least one compensation winding (K), which is magnetically coupled to the core of the transformer,
- at least one switching unit (T, T1, T2), which is arranged electrically in series with the compensation winding (K) in a current path, in order to feed a current into the compensation winding, the effect of which is directed opposite to the unidirectional flux component, and
- at least one current-limiting reactor (L, L/4), which is arranged electrically in series with the compensation winding (K) in a current path, wherein
- two switching units (T1, T2) are connected in parallel with each other per current-limiting reactor (L, L/4),
- the current-limiting reactor (L/4) consists of two windings (W1, W2), **characterised in that** the windings can be connected either in series or in parallel with each other, wherein
- in the case of the parallel connection, the first winding (W1) is connected in series with the first switching unit (T1) and the second winding (W2) is connected in series with the second switching unit (T2),
- whereas in the case of the series connection, the first and second winding (W1, W2) are connected in series with one another and with the first switching unit (T1).

2. Device according to claim 1, **characterised in that** the first and second winding (W1, W2) are magnetically coupled to each other by way of a shared magnetic ring (R).

3. Device according to claim 2, **characterised in that** the first and second winding (W1, W2) are each wound around a magnetic limb (S1, S2), the two limbs (S1, S2) are aligned in parallel with each other and are connected to one another on their end faces by a magnetic yoke (Jo, Ju) in each case.

4. Device according to claim 3, **characterised in that** at least one magnetic yoke (Jo, Ju) has two yoke limbs connected to one another at their ends in each case, wherein a number of turns (WH1) of the first winding (W1) are wound over a yoke limb and the same number of turns (WH2) of the second winding (W2) are wound in the opposite direction over the other yoke limb.

5. Device according to one of claims 1 to 4, **characterised in that** the switching unit (T, T1, T2) contains at least one semiconductor switch, preferably a thyristor.

6. Device according to one of claims 1 to 5, **characterised in that** the switching unit (T, T1, T2) is connected to a control unit, which is connected to a measuring apparatus for detecting the magnetic unidirectional flux component.

7. Method for operating a device according to one of claims 1 to 6, **characterised in that** in the case where at most only a quarter of the maximum possible compensation current is required, the two windings (W1, W2) of the current-limiting reactor (L/4) are connected in series with each other and only one switching unit (T1) is used, while in the case where more than a quarter of the maximum possible compensation current is required, the two windings (W1, W2) of the current-limiting reactor (L/4) are connected in parallel with each other and both switching units (T1, T2) are used.

8. Method according to claim 7, **characterised in that** a control criterion with hysteresis is used for the switchover between a parallel and series connection.

9. Method according to claim 7 or 8, **characterised in that** the controller for controlling the switching units (T, T1, T2) comprises a timer, which is triggered by a phase detector, which detects the phase of the voltage induced in the compensation winding (K) and activates the switching unit (T, T1, T2) such that a pulsing direct current is fed into the compensation winding (K).

## Revendications

1. Dispositif destiné à réduire une proportion de flux magnétique continu dans le noyau d'un transformateur, comprenant
- au moins un bobinage de compensation (K) qui est couplé magnétiquement au noyau du transformateur,
- au moins une unité de commutation (T, T1, T2) qui est disposée électriquement dans un trajet de courant en série avec le bobinage de compensation (K), pour alimenter le bobinage de compensation avec un courant, dont l'action est à l'opposé de la proportion de flux continu, et
- au moins une inductance de protection (L, L/4) qui est disposée électriquement dans un trajet de courant en série avec le bobinage de compensation (K), dans lequel, par inductance de protection (L, L/4), deux unités de commutation (T1, T2) sont raccordées en parallèle l'une par rapport à l'autre,
- l'inductance de protection (L, L/4) se compose de deux bobinages (W1, W2), **caractérisé en ce que** les bobinages (W1, W2) peuvent être commutés l'un par rapport à l'autre soit en série soit en parallèle, dans lequel
- en cas de raccordement en parallèle le premier bobinage (W1) est raccordé en série par rapport à la première unité de commutation (T1) et le deuxième bobinage (W2) est raccordé en série par rapport à la deuxième unité de commutation (T2),
- tandis que dans le cas du raccordement en série le premier et le deuxième bobinage (W1, W2) sont raccordés en série l'un par rapport à l'autre et par rapport à la première unité de commutation (T1).

2. Dispositif selon la revendication 1, **caractérisé en ce que** le premier et le deuxième bobinage (W1, W2) sont couplés l'un à l'autre magnétiquement par l'intermédiaire d'une bague magnétique (R) commune.

3. Dispositif selon la revendication 2, **caractérisé en ce que** le premier et le deuxième bobinage (W1, W2) sont enroulés respectivement autour d'une branche magnétique (S1, S2), les deux branches (S1, S2) sont orientées parallèlement l'une par rapport à l'autre et sont reliées au niveau de leurs faces frontales respectivement par le biais d'une culasse magnétique (Jo, Ju).

4. Dispositif selon la revendication 3, **caractérisé en ce qu'**au moins une culasse magnétique (Jo, Ju) présente deux branches de culasse reliées respectivement l'une à l'autre au niveau de leurs extrémités, dans lequel par l'intermédiaire d'une branche de culasse plusieurs spires (WH1) du premier bobinage (W1) et par l'intermédiaire de l'autre branche de culasse le même nombre de spires (WH2) du deuxième bobinage (W2) sont enroulés dans la direction opposée.

5. Dispositif selon l'une des revendications 1 à 4, **caractérisé en ce que** l'unité de commutation (T, T1, T2) contient au moins un commutateur à semi-conducteurs, de préférence un thyristor.

6. Dispositif selon l'une des revendications 1 à 5, **caractérisé en ce que** l'unité de commutation (T, T1, T2) est reliée à une unité de commande qui est reliée à un équipement de mesure destiné à détecter la proportion de flux magnétique continu.

7. Procédé destiné à faire fonctionner un dispositif selon l'une des revendications 1 à 6, **caractérisé en ce que** dans le cas où tout au plus un quart du courant de compensation possible maximal est nécessaire, les deux bobinages (W1, W2) de l'inductance de protection (L/4) sont raccordés en série l'un par rapport à l'autre et seule une unité de commutation (T1) est mise en oeuvre, tandis que dans le cas où plus d'un quart du courant de compensation possible maximal est nécessaire, les deux bobinages (W1, W2) de l'inductance de protection (L/4) sont raccordés en parallèle l'un par rapport à l'autre et les deux unités de commutation (T1, T2) sont mises en oeuvre.

8. Procédé selon la revendication 7, **caractérisé en ce que** pour le basculement entre le raccordement en parallèle et le raccordement en série un critère de réglage avec une hystérèse est utilisé.

9. Procédé selon la revendication 7 ou 8, **caractérisé en ce que** la commande destinée à commander les unités de commutation (T, T1, T2) comprend un organe temporisateur qui est déclenché par un détecteur de phases, lequel détecte la phase de la tension induite dans le bobinage de compensation (K) et commande l'unité de commutation (T, T1, T2) de sorte que le bobinage de compensation (K) est alimenté avec un courant continu pulsé.
